# EUROPÄISCHE PATENTSCHRIFT

(11) **EP 0 387 626 B1**
(45) Veröffentlichungstag und Bekanntmachung des Hinweises auf die Patenterteilung: **21.09.1994**
(21) Anmeldenummer: 90104058.4
(22) Anmeldetag: 02.03.1990
(51) Int. Cl.: G03B 17/30

(54) **Filmpatrone**
Filmcassette
Cassette de film

(30) Priorität: 15.03.1989 DE 3908448
(43) Veröffentlichungstag der Anmeldung: 19.09.1990
(73) Patentinhaber: Agfa-Gevaert AG, 51373 Leverkusen (DE)
(72) Erfinder: Wegmershaus, Wolfgang, D-8000 München 71 (DE)

(56) Entgegenhaltungen:
- EP-A- 0 025 158
- DE-A- 3 118 210
- DE-A- 3 835 305

## Beschreibung

Die Erfindung betrifft eine Filmpatrone, insbesondere eine Kleinbildfilmpatrone mit verbesserter Lichtabdichtung.

Filmpatronen bestehen aus einem annähernd zylindrischen Mantel mit einem quer über den Mantel verlaufenden Filmmaul mit Ober- und Unterlippe, stirnseitig aufgesetzten Kappen und einer Spule, auf die ein lichtempfindlicher Film aufgewickelt ist oder aufgewickelt werden soll. Ober- und Unterlippe des Filmmauls sind mit Samt belegt, um ein Eindringen von Licht in das Innere der Patrone zu verhindern.

Derartige Patronen und ihre Herstellung sind z.B. aus DE-A-31 18 210 bekannt. Die dort beschriebenen Kappen sind mit Vorsprüngen versehen, die das Filmmaul seitlich abschließen und so einen Lichteinfall aus dieser Richtung verhindern. Nachteilig an dieser Lösung ist, daß zwei verschiedene Arten von Kappen hergestellt werden müssen, da die Kappe auf der einen Seite der Patronen wegen des Vorsprunges spiegelsymmetrisch zur Kappe für die andere Seite der Patrone ist. Nachteilig ist auch, daß sichergestellt werden muß, daß die Werkzeuge, die die Kappen aufsetzen, jeweils mit der passenden Art Kappen beschickt werden (Verwechselungsgefahr). Nachteilig ist schließlich, daß die Kappe mit Vorsprung nur in einer bestimmten Stellung auf den Mantel mit Filmmaul paßt.

Es ist daher vorzuziehen, rotationssymmetrische Kappen zu verwenden, von denen nur eine Sorte hergestellt zu werden braucht und die in jeder beliebigen Position auf den Mantel aufgesetzt werden können. Um diese rotationssymmetrischen Kappen auf den Mantel aufsetzen zu können, muß der Mantel im Bereich von Ober- und Unterlippe schmäler sein. Um die seitlichen Bereiche des Patronenmauls gegen das Einfallen von Licht abzudichten, ist es erforderlich, den in das Maul eingeklebten Samt seitlich aus dem Maul herausragen zu lassen, in Richtung auf den Patronenmantel umzubiegen und ihn in dieser Stellung durch das Aufsetzen der Kappen zu fixieren.

Dies hat sich als störanfällig erwiesen, weil es bei der Massenproduktion von Patronen mit schnellaufenden Maschinen vorkommen kann, daß der Samt sich aufrichtet bevor die Kappe aufgesetzt wird. Außerdem ist zum Niederhalten des Samtes ein separates Maschinenteil erforderlich.

Aufgabe der Erfindung ist es, eine Filmpatrone bereitzustellen, die mit rotationssymmetrischen Kappen versehen ist, bei der das Aufrichten des Samtes seitlich vom Patronenmaul wirksam verhindert wird und dadurch ein seitlicher Lichteinfall ins Patronenmaul ausgeschlossen ist.

Diese Aufgabe wird dadurch gelöst, daß der Mantel an der Stelle, wo die Oberlippe des Filmmauls beginnt, auf beiden Seiten Aussparungen aufweist, um das Aufsetzen der Stirnkappen zu ermöglichen, der Mantel dann sich aber zunehmend bis zum Ende der Oberlippe auf das ursprüngliche Maß verbreitert, wodurch an den Seiten der Oberlippe Dreiecke gebildet werden, die in Richtung auf die seitlichen Öffnungen des Filmmauls um ca. 90° so umgebogen sind, daß die Biegekante annähernd bündig mit der Innenkante der rotationssymmetrisch ausgebildeten Kappe abschließt.

Vorzugsweise beträgt der Umbiegewinkel 80 bis 105°.

Im Bereich der Unterlippe ist der Mantel über die ganze Länge der Unterlippe entsprechend bekannter Patronen schmäler. Wenigstens der Samtstreifen für die Oberlippe ist länger als die Breite der Unterlippe des Filmmauls. Vorzugsweise ist die Länge dieses Samtstreifens so groß wie die größte Breite des Mantelbleches, ragt infolgedessen auf beiden Seiten seitlich aus dem Filmmaul heraus und wird durch das Umbiegen der Dreiecke ebenfalls umgebogen.

Ein weiterer Vorteil der neuen Patrone besteht darin, daß durch die umgebogene seitliche Kante der Oberlippe verhindert wird, daß der Benutzer sich an dieser Stelle kratzt oder schneidet, wie das bei den freien Kanten der Oberlippe bisheriger Patronen verschiedentlich vorkommt.

Von Vorteil ist schließlich, das kein zusätzliches Maschinenteil zum Niederhalten des Samtes benötigt wird.

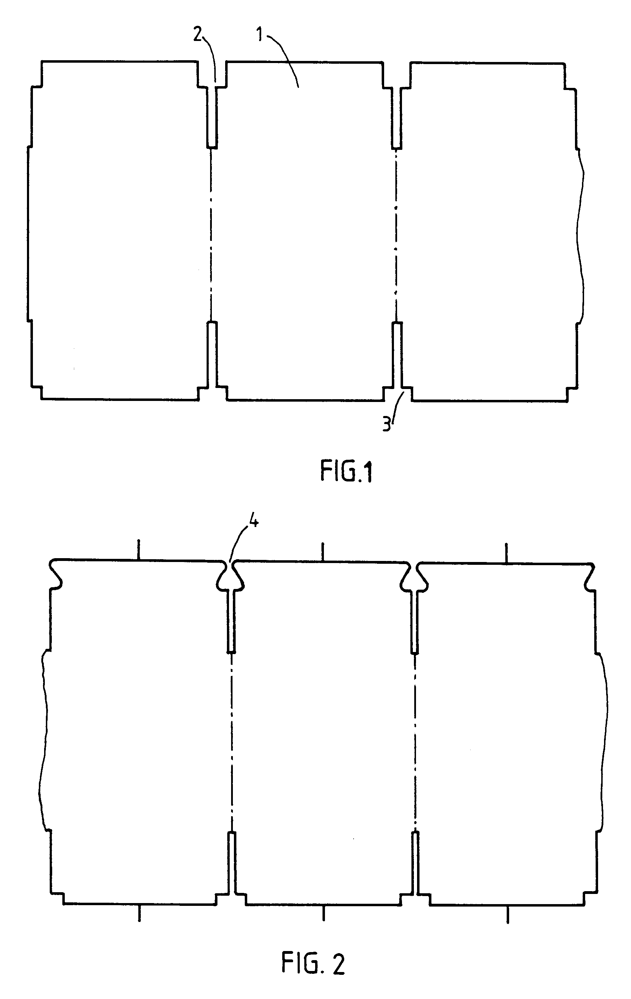

Fig. 1 zeigt einen Blechstreifen zur Herstellung von 3 Mantelblechen (1), an denen die Aussparungen (2) für Oberlippe und (3) für die Unterlippe gemäß Stand der Technik zu erkennen sind.

Fig. 2 zeigt einen entsprechenden Blechstreifen mit den erfindungsgemäßen Aussparungen (4) für die Oberlippe.

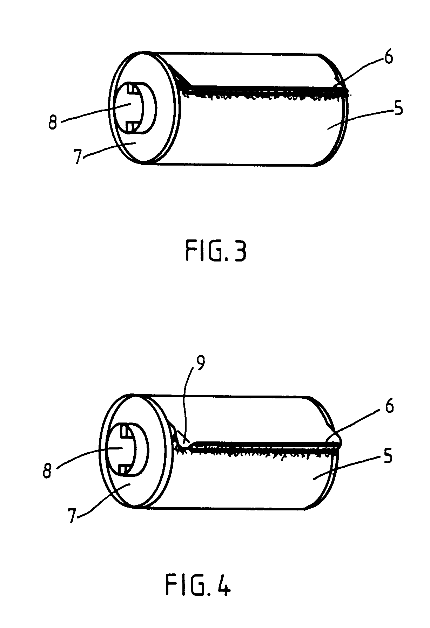

Fig. 3 zeigt eine herkömmlichen Patrone mit Mantel (5), Filmmaul (6), Kappe (7) und Spulenzapfen (8).

Fig. 4 zeigt eine erfindungsgemäße Patrone mit Mantel (5), Filmmaul (6), Kappe (7) und Spulenzapfen (8) sowie dem umgebogenen Dreieck (9) der Manteloberlippe.

Die Herstellung der erfindungsgemäßen Filmpatronen erfolgt dadurch, daß in einen Blechstreifen, dessen Breite der Länge des Umfanges eines fertig geformten Mantels entspricht und dessen Länge der Breite mehrerer nebeneinanderliegender Mäntel entspricht, die erfindungsgemäßen Kappenkerben gestanzt werden, vor dem Abtrennen der Mantelbleche mindestens längs der die Oberlippe des Filmmauls bildenden Kante, vorzugsweise längs beider das Filmmaul bildenden Kanten, Dichtungsstreifen kontinuierlich aufgebracht und im Bereich der Kappenkerben durch ein Schneidewerkzeug durchtrennt werden, die einzelnen Mantelbleche vom Blechstreifen abgetrennt und in gewünschter Weise zum Patronenmantel mit Filmmaul gebogen werden, eine Leerspule oder eine mit lichtempfindlichem Material umwickelte Spule in den Mantel eingeschoben wird, Stirnkappen aufgesetzt und die vom Mantel seitlich im Bereich der Oberlippe herausragenden dreieckigem Blechstücke in Richtung auf den Schlitz zwischen Ober- und Unterlippe umgebogen werden.

Die Blechstreifen können vor dem ersten Arbeitsgang entsprechend der bei der fertigen Patrone gewünschten Erscheinungsform lackiert und bedruckt sein, u.a. mit den film- und firmenspezifischen Daten und sonstigen Angaben. Gegebenenfalls enthalten die Felder auch die Kodierungen nach dem bekannten DX-System.

In einer bevorzugten Ausführungsform werden aus dem Samtstreifen für die Unterlippe des Filmmaules im Bereich der Kappenkerben gleichschenklige, annäherd rechtwinklige Dreiecke derart ausgeschnitten, daß der Samtstreifen an der Unterlippe jedes Mantelbleches an beiden Seiten um etwa 45°C abgeschrägt ist.

Durch diese Abschägung wird verhindert, daß am oberen und unteren Ende des Mantels im Bereich zwischen Unterlippe und Mantel ein Samtwulst entsteht, der die Verwendung der Patrone in einer sogenannten "Drop-in loading" Kamera, bei der nicht die Rückseite, sondern der Boden der Kamera zum Einlegen des Films geöffnet wird, infrage stellen würde.

## Patentansprüche

1. Filmpatrone aus einem annähernd zylindrischen Mantel (5) mit einem quer über den Mantel verlaufenden Filmmaul (6) aus Ober- und Unterlippe, stirnseitig aufgesetzten Kappen (7) und einer Filmspule (8) im Inneren der Patrone, wobei wenigstens die Oberlippe des Filmmaules mit Samt belegt ist, der seitlich aus dem Maul herausragt, dadurch gekennzeichnet, daß der Mantel an der Stelle, wo die Oberlippe des Filmmaules beginnt, auf beiden Seiten Aussparungen (2) aufweist, dann sich aber zunehmend bis zum Ende der Oberlippe auf das ursprüngliche Maß verbreitert, wodurch an den Seiten der Oberlippe Dreiecke (9) gebildet werden, die in Richtung auf die seitlichen Öffnungen des Filmmaules um ca. 90° so umgebogen sind, daß die Biegekante annähernd bündig mit der Innenkante der rotationssymmetrisch ausgebildeten Kappe abschließt.

2. Filmpatrone nach Anspruch 1, wobei Ober- und Unterlippe des Filmmaules mit Samt belegt sind.

3. Filmpatrone nach Anspruch 1, wobei der Umbiegewinkel 80 bis 105° beträgt.

4. Filmpatrone nach Anspruch 2, wobei aus dem Samtstreifen für die Unterlippe des Filmmaules gleichschenklige, annähernd rechtwinklige Dreiecke derart angeschnitten sind, daß der Samtstreifen jeder Platine an der Unterlippe jeder Platine an beiden Seiten um etwa 45° abgeschrägt ist.

## Claims

1. Film cassette consisting of an approximately cylindrical casing (5) with a film mouth (6), which extends transversely across the casing and has a top and a bottom lip, caps (7) which are mounted at the ends and a film spool (8) inside the cassette, at least the top lip of the film mouth being covered with velvet, which projects out of the mouth at the sides, characterised in that the casing comprises recesses (2) on both sides at the point where the top lip of the film mouth commences, but then widens increasingly to the end of the top lip to attain the original dimension, as a result of which triangles (9) are formed at the sides of the top lip which are bent over towards the lateral openings of the film mouth by approximately 900 such that the bending edge is approximately flush with the inner edge of the rotationally symmetrical cap.

2. Film cassette according to claim 1, in which the top and the bottom lip of the film mouth are covered with velvet.

3. Film cassette according to claim 1, in which the angle of bend is between 80 and 105°.

4. Film cassette according to claim 2, in which isosceles, approximately right-angled triangles are cut out of the velvet strip for the bottom lip of the film mouth such that the velvet strip of each sheet is chamfered at both sides by approximately 45° at the bottom lip of each sheet.

## Revendications

1. Cartouche de pellicule faite d'une paroi latérale (S) approximativement cylindrique présentant une bouche (6) de passage de la pellicule qui s'étend transversalement sur la paroi latérale, et est composée d'une lèvre supérieure et d'une lèvre inférieure, des joues (7) emboîtées aux extrémités axiales, et une bobine de pellicule (8) logée à l'intérieur de la cartouche, dans laquelle au moins la lèvre supérieure de la bouche de passage de la pellicule est garnie de velours qui déborde latéralement en dehors de la bouche, caractérisée en ce qu'à l'endroit où commence la lèvre supérieure de la bouche de passage de la pellicule, la paroi latérale présente des évidements (2) sur les deux côtés, puis s'élargit jusqu'à l'extrémité de la lèvre supérieure, pour reprendre sa dimension initiale, de sorte qu'il se forme sur les côtés de la lèvre supérieure des triangles (9) qui sont repliés d'environ 90° en direction des ouvertures latérales de la bouche de passage de la pellicule, de telle manière que le bord plié se termine à peu près dans le même plan que le bord inférieur de la joue possédant une symétrie de révolution.

2. Cartouche de pellicule selon la revendication 1, dans laquelle la lèvre supérieure et la lèvre inférieure de la bouche de passage de la pellicule sont garnies de velours.

3. Cartouche de pellicule selon la revendication 1, dans laquelle l'angle de pliage est de 80 a 105°.

4. Cartouche de pellicule selon la revendication 2, dans laquelle des triangles isocèles, à peu près rectangles, sont découpés dans la bande de velours prévue pour la lèvre inférieure de la bouche de passage de la pellicule de telle manière qu'au niveau de la lèvre inférieure de chaque platine, la bande de velours de chaque platine soit découpée en biseau à environ 45° sur les deux côtés.
